# FASCICULE DE BREVET EUROPEEN

(11) **EP 2 900 496 B1**
(45) Date de publication et mention de la délivrance du brevet: **04.09.2019**
(21) Numéro de dépôt: 13745451.8
(22) Date de dépôt: 05.07.2013
(51) Int. Cl.: B62D 35/02, B60G 21/05

(54) **TRAIN ARRIÈRE D'UN VÉHICULE AUTOMOBILE COMPORTANT UN CARÉNAGE AÉRODYNAMIQUE**
AERODYNAMISCH AUSGEBILDETES VERKLEIDUNGSTEIL FÜR DIE RADAUFHÄNGUNG EINES KRAFTFAHRZEUGES
AERODYNAMICALLY SHAPED FAIRING PART FOR THE SUSPENSION OF AN AUTOMOBILE

(30) Priorité: 29.10.2012 FR 1260279
(43) Date de publication de la demande: 05.08.2015
(73) Titulaire: Renault S.A.S., 92100 Boulogne-Billancourt (FR)
(72) Inventeur: GULIE, Camelia, Arges (RO); PLESUVESCU, Elena, R-Sector 6 Bucaresti (RO)
(86) Numéro de dépôt international: PCT/FR2013/051615
(87) Numéro de publication internationale: WO 2014/049215

(56) Documents cités:
- EP-A1- 0 030 122
- EP-A1- 2 476 565
- DE-A1- 3 110 991
- JP-A- 2005 053 321
- US-A1- 2007 096 420

## Description

### Objet de l'invention :

La présente invention concerne un train ou essieu arrière de véhicule automobile.

L'invention se rapporte plus particulièrement à un train arrière comprenant une traverse centrale perpendiculaire à la direction longitudinale du véhicule, interposée entre des bras latéraux, dits « bras tirés », situés de chaque côté du véhicule, reliés par leur extrémité avant à la structure de ce dernier et supportant à leur extrémité arrière des supports de fusées de roues arrière du véhicule.

### Etat de la technique et problème posé :

L'aérodynamisme d'un véhicule est une composante bien connue de sa consommation. Les constructeurs automobiles attachent aujourd'hui une attention particulière à la forme extérieure des véhicules en vue d'obtenir des flux aérodynamiques autour du véhicule les plus à même de minimiser la résistance à l'air du véhicule et la surconsommation induite. On sait également que l'aérodynamisme impacte fortement les bruits lors du roulage.

Les phénomènes aérodynamiques sous le véhicule, c'est-à-dire entre la route et le plancher sont dégradés par la forme des trains, lignes d'échappement et autres formes irrégulières du plancher qui ne permettent pas ou ne facilitent pas toujours un écoulement fluide et régulier de l'air sous le véhicule entre l'avant et l'arrière. Ceci est encore aggravé lorsque le véhicule a une garde au sol importante, et que le train arrière est souple.

Le document JP 2005 053321 A décrit un train arrière de véhicule automobile comprenant une traverse centrale perpendiculaire à la direction longitudinale du véhicule, interposée entre des bras latéraux situés de chaque côté du véhicule, ce train arrière comprenant un carénage aérodynamique recouvrant par le dessous la traverse centrale et une partie des bras latéraux.

L'invention vise à améliorer l'écoulement aérodynamique sous le véhicule, en vue d'une moindre consommation du véhicule et d'une réduction des bruits.

### Objet(s) de l'invention :

A cet effet, l'invention a pour objet un train arrière de véhicule automobile comprenant une traverse centrale perpendiculaire à la direction longitudinale du véhicule, interposée entre des bras latéraux situés de chaque côté du véhicule, reliés par leur extrémité avant à la structure de ce dernier et supportant à leur extrémité arrière des supports de fusées de roues arrière du véhicule, le train arrière comprenant un carénage aérodynamique recouvrant par le dessous la traverse centrale et la partie des bras latéraux qui s'étend entre les extrémités de la traverse centrale et les extrémités arrière des bras latéraux, caractérisé en ce que le carénage aérodynamique est une pièce en matière plastique d'un seul tenant ayant la forme générale d'un U dont une partie au moins de la branche centrale du U est conformée pour s'ajuster et fermer une ouverture orientée vers le bas formée le long de la traverse centrale 1, le carénage aérodynamique comprenant sur la branche centrale du U des moyens d'indexation conformés en saillie vers le haut, ces moyens d'indexation coopérant avec une première face intérieure de la traverse centrale située dans une région creuse de ladite traverse débouchant vers le bas, le carénage aérodynamique comprend également sur la branche centrale du U des moyens de clippage conformés en saillie vers le haut, ces moyens de clippage coopérant avec des évidements conformés dans une seconde face intérieure de la traverse centrale située dans la région creuse de la traverse en vis-à-vis de la première face intérieure.

Le carénage réduit significativement les irrégularités de formes au niveau du train arrière, ce qui améliore particulièrement l'aérodynamique sous le véhicule et permet incidemment de réduire la consommation.

Selon d'autres caractéristiques avantageuses de l'invention :
- le carénage aérodynamique recouvre également par le dessous des coupelles de suspension formant appui pour des ressorts de suspension du véhicule, ces coupelles étant accolées aux bras latéraux à l'arrière de la traverse centrale,
- les moyens d'indexation comportent au moins deux appliques, notamment trois appliques réparties sur la longueur de la traverse centrale, chaque applique supportant un pion d'indexation pénétrant dans un trou correspondant ménagé dans la première face intérieure,
- le carénage aérodynamique est fixé dans la zone des branches latérales du U par des vis assurant une fixation avec les coupelles de suspension,
- le carénage aérodynamique est fixé dans la zone des branches latérales du U par des moyens d'agrafage ou de rivetage assurant une fixation avec les bras latéraux et/ou avec les coupelles de suspension,
- le carénage aérodynamique a une face inférieure sensiblement plate, et comporte un contour ayant, au moins dans certaines zones périphériques, un bord relevé épousant la forme extérieure de la traverse centrale, des bras latéraux et des coupelles de suspension,

L'invention a également pour objet un véhicule automobile comprenant un train arrière ayant tout ou partie des caractéristiques précédentes.

### Description détaillée de l'invention :

L'invention sera mieux comprise à la lecture de la description suivante d'un exemple non limitatif de l'invention, et à la lumière des dessins annexés sur lesquels :
- les figures 1 et 2 représentent une vue de dessous d'un train arrière de véhicule automobile suivant l'invention, le train étant respectivement représenté sans et avec un carénage aérodynamique,
- les figures 3 et 4 représentent une vue en perspective de dessus d'un train arrière de véhicule automobile suivant l'invention, le train étant respectivement représenté sans et avec un carénage aérodynamique,
- les figures 5 et 6 représentent le carénage aérodynamique seul de l'invention, en vue respectivement de dessus (en perspective) et en vue de dessous, et
- la figure 7 est une vue en perspective éclatée du train arrière selon l'invention.

Dans la description qui suit, on fait référence au repère classique XYZ du véhicule dans lequel X représente la direction longitudinale du véhicule, dirigé vers l'arrière, Y la direction transversale au véhicule, dirigé vers la droite, et Z la direction verticale. Les notions « avant » et « arrière » sont indiquées en référence à l'orientation « avant-arrière » du véhicule.

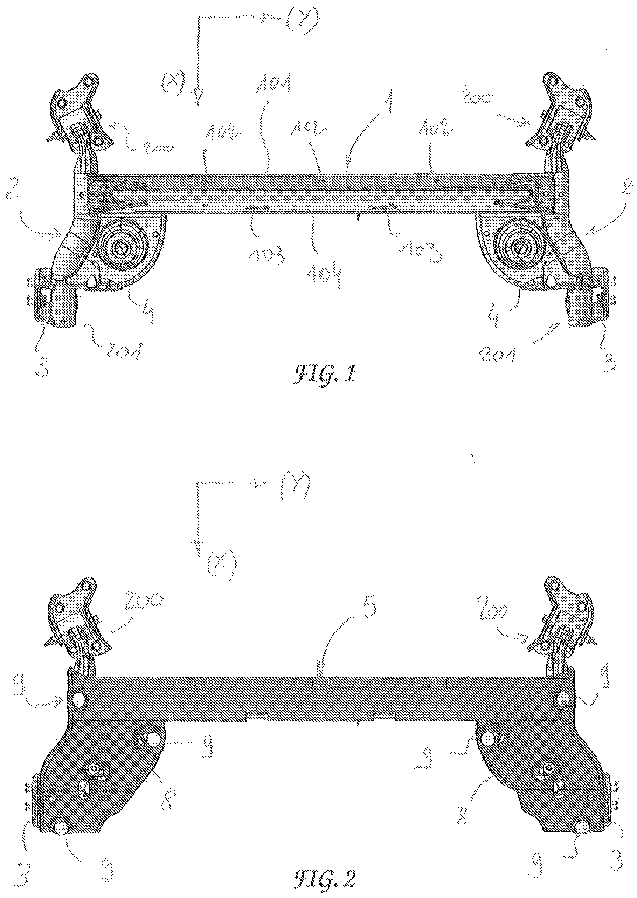

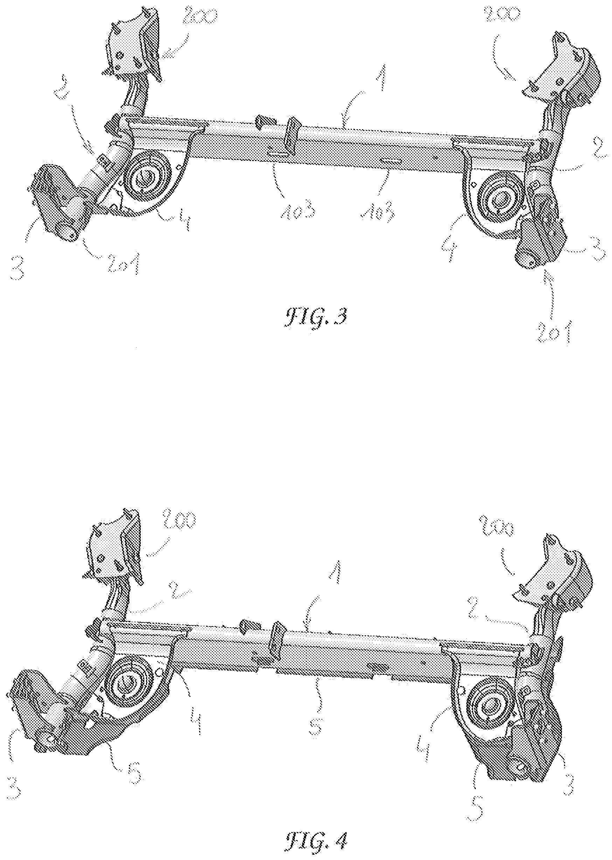

On a représenté aux figures 1 et 3 un train arrière de véhicule automobile comprenant une traverse centrale 1 perpendiculaire à la direction longitudinale X. La traverse s'étend sur toute la largeur du véhicule et est interposée entre les bras latéraux 2 auxquels elle est reliée rigidement. La traverse 1 a la forme générale d'un profilé dont la section transversale est en V ou en U, l'ouverture étant tournée vers le sol.

Les bras 2 sont globalement orientés suivant la direction longitudinale X et sont reliés à leur extrémité avant 200 à la structure du véhicule par des moyens de liaison autorisant le débattement rotatif des bras 2. Les bras latéraux 2 comportent à leur extrémité arrière 201 des supports 3 de fusées (non représentées) des roues arrière du véhicule (également non représentées).

La traverse centrale 1 est reliée aux bras 2 sensiblement au tiers de leur longueur, considéré par rapport à leur extrémité avant.

Le train arrière illustré à la figure 1 comprend également des coupelles de suspension 4 formant appui pour des ressorts de suspension (non représentés) du véhicule. Ces coupelles 4 sont accolées et reliées rigidement aux bras latéraux 2 et à la traverse centrale 1, à l'arrière de celle-ci. Ces coupelles 4 sont logées dans les angles délimités par la traverse 1 et chacun des bras 2.

Comme représenté aux figures 2 et 4, le train arrière selon l'invention comprend un carénage aérodynamique 5 recouvrant par le dessous la traverse centrale 1 et la partie des bras latéraux 2 qui s'étend entre les extrémités de la traverse centrale 1 et les extrémités arrière 201 des bras latéraux 2. La partie extérieure et visible du carénage 5 est donc tournée vers le sol. Le carénage aérodynamique 5 recouvre également par le dessous des coupelles de suspension 4.

Le carénage aérodynamique 5 a la forme générale d'un U, en vue à plat de dessus ou de dessous. La branche centrale du U formé par le carénage recouvre la traverse centrale 1 et les branches latérales du U recouvrent les coupelles ainsi que la partie précitée des bras latéraux 2. Le carénage a une forme générale sensiblement plate qui est inscrite dans le plan du U. La branche centrale du U a une largeur mesurée suivant la direction X qui est égale ou supérieure à la dimension de la traverse centrale suivant cette direction, de façon à la recouvrir totalement. Les branches latérales du U ont une largeur mesurée suivant la direction Y qui est égale ou supérieure à la dimension des coupelles 4 et des bras latéraux suivant cette même direction, de façon à recouvrir ces éléments totalement à l'arrière la traverse centrale 1.

Le carénage 5 est une pièce typiquement en matière plastique injectée, qui est réalisée d'un seul tenant.

Le carénage 5 est indexé, autrement dit mis en position sur la traverse centrale 1, via des moyens d'indexation 6 conformés en saillie vers le haut sur la branche centrale du U. Dans l'exemple illustré ces moyens d'indexation coopèrent avec une première face intérieure 101 de la traverse centrale 1 située dans une région creuse de la traverse. Comme cela est visible à la figure 1, la traverse 1 est un profilé métallique ayant une section transversale sensiblement en V ou en U (considéré dans un plan perpendiculaire à la direction Y), dont l'ouverture est tournée vers le bas. Les moyens d'indexation 6 sont conformés le long d'un bord avant de la branche centrale du U.

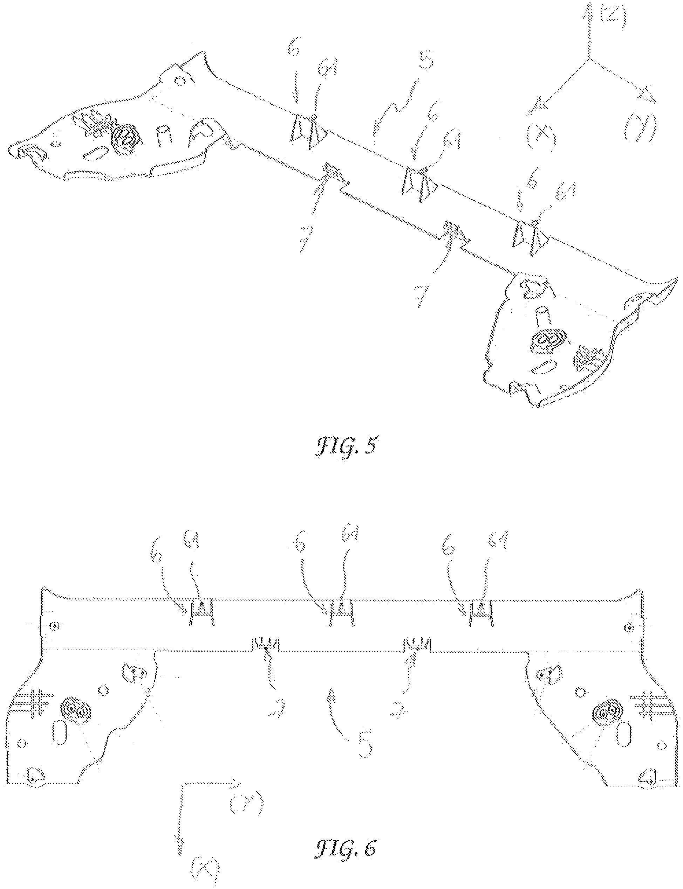

Les moyens d'indexation 6 comportent au moins deux appliques, par exemple trois appliques tel qu'illustré (figures 5, 6, 7), qui s'étendent perpendiculairement au plan du carénage 5 (côté face supérieure), et supportent chacune un pion d'indexation 61 pénétrant dans un trou 102 correspondant ménagé dans la première face intérieure. Les moyens d'indexation 6 sont répartis sur la longueur suivant Y de la branche centrale du U, et sont disposés sur un bord avant de cette branche centrale. Une partie au moins de la branche centrale du U formé par le carénage aérodynamique est conformée pour s'ajuster et fermer par emboitement l'ouverture en U ou en V orientée vers le bas de la traverse centrale 1. La traverse centrale 1 et la branche centrale du carénage forment conjointement un corps s'étendant transversalement (suivant la direction Y du véhicule) et ayant une section transversale fermée (section considérée suivant un plan XZ). Ainsi on améliore significativement l'aérodynamisme sous le véhicule en réduisant les zones les zones creuses ou concaves tournées vers le sol. Dans l'exemple de réalisation illustré, la branche centrale du U formée par le carénage aérodynamique 5 ferme l'ouverture débouchante de la traverse centrale 1 sur la totalité de sa longueur (suivant la direction transversale Y du véhicule).

Le carénage aérodynamique 5 est fixé à la traverse 1, aux coupelles 4 ainsi qu'au bras 2 comme indiqué ci-après.

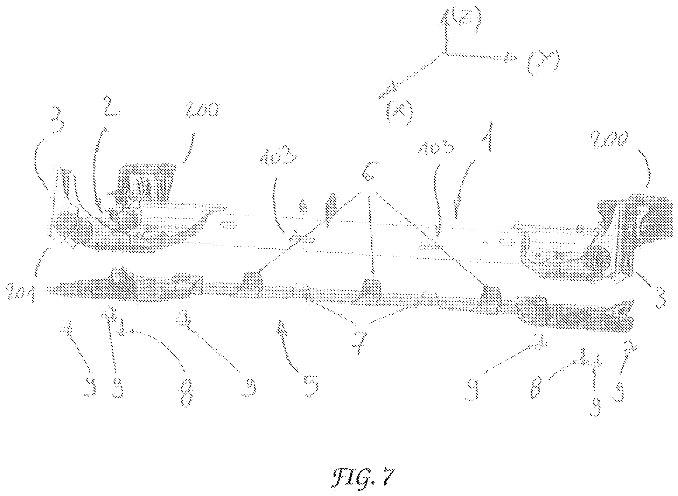

En référence aux figures 5, 6 et 7, le carénage 5 comprend sur la branche centrale du U des moyens de clippage 7 conformés en saillie vers le haut. Ces moyens de clippage 7 sont typiquement constitués de bossages ou rampes conformés sur des pattes déformables élastiquement. On prévoit dans l'exemple illustré deux moyens de clippage, disposés en quinconce par rapport aux moyens d'indexation 6. Les moyens de clippage 7 sont disposés sur un bord arrière de la branche centrale du U et coopèrent avec des évidements 103 conformés dans une seconde face intérieure 104 de la traverse centrale 1 (figures 1, 7). Les moyens d'indexation 6 et les moyens de clippage 7 étant placés sur des bords opposés de la branche centrale du U et coopérant avec des faces intérieures 101, 104 situées en vis-à-vis à l'intérieur de la partie creuse de la traverse 1, ces moyens d'indexation et de clippage assurent un calage du carénage suivant la direction X, en même temps qu'un positionnement suivant les directions Y et Z.

Par ailleurs, le carénage aérodynamique 5 est fixé dans la zone des branches latérales du U par des vis 8 assurant une fixation avec les coupelles de suspension 4 (figures 2, 7). Une vis est typiquement prévue de chaque côté du carénage 5, sensiblement au centre de chaque branche latérale du U.

Des moyens d'agrafage ou de rivetage 9 assurent une fixation avec les bras latéraux 2 et/ou avec les coupelles de suspension 4 (figures 2 et 7). Comme cela est visible à la figure 2, on prévoit par exemple une agrafe 9 entre le carénage et chaque bras 2, dans le prolongement de la traverse 1. On prévoit également une agrafe 9 (coopérant avec une coupelle 4) à la base de chaque branche latérale du U, à proximité de la branche centrale du U. On prévoit encore une agrafe 9 au sommet de chaque branche latérale du U, coopérant avec les extrémités arrière 201 des bras latéraux 2. Les agrafes 9 sont disposées en triangle de façon à répartir les efforts de maintien sur la surface du carénage 5.

Le carénage a une face inférieure sensiblement plate, et comporte un contour ayant un bord relevé épousant la forme extérieure de la traverse centrale 1, des bras latéraux 2 et des coupelles de suspension 4. Le carénage s'emboite ainsi avec la forme et le contour de ces éléments. Le carénage 1 réalise une fermeture de la partie creuse de la traverse 1 et élimine les irrégularités de forme de la traverse 1, des coupelles 4 et des bras latéraux 2.

## Revendications

1. Train arrière de véhicule automobile comprenant une traverse centrale (1) perpendiculaire à la direction longitudinale du véhicule, interposée entre des bras latéraux (2) situés de chaque côté du véhicule, reliés par leur extrémité avant (200) à la structure de ce dernier et supportant à leur extrémité arrière (201) des supports (3) de fusées de roues arrière du véhicule, le train arrière comprenant un carénage aérodynamique (5) recouvrant par le dessous la traverse centrale (5) et la partie des bras latéraux (2) qui s'étend entre les extrémités de la traverse centrale (1) et les extrémités arrière (201) des bras latéraux (2), **caractérisé en ce que** le carénage aérodynamique (5) est une pièce en matière plastique d'un seul tenant ayant la forme générale d'un U dont une partie au moins de la branche centrale du U est conformée pour s'ajuster et fermer une ouverture orientée vers le bas formée le long de la traverse centrale 1, le carénage aérodynamique (5) comprenant sur la branche centrale du U des moyens d'indexation (6) conformés en saillie vers le haut, ces moyens d'indexation (6) coopérant avec une première face intérieure (101) de la traverse centrale (1) située dans une région creuse de ladite traverse (1) débouchant vers le bas, le carénage aérodynamique (5) comprend également sur la branche centrale du U des moyens de clippage (7) conformés en saillie vers le haut, ces moyens de clippage (7) coopérant avec des évidements (103) conformés dans une seconde face intérieure (104) de la traverse centrale (1) située dans la région creuse de la traverse (1) en vis-à-vis de la première face intérieure (101).

2. Train arrière selon la revendication 1, **caractérisé en ce que** le carénage aérodynamique (5) recouvre également par le dessous des coupelles de suspension (4) formant appui pour des ressorts de suspension du véhicule, ces coupelles (4) étant accolées aux bras latéraux (2) à l'arrière de la traverse centrale (1).

3. Train arrière selon la revendication 1 ou 2, **caractérisé en ce que** les moyens d'indexation (6) comportent au moins deux appliques, notamment trois appliques réparties sur la longueur de la traverse centrale (1), chaque applique supportant un pion d'indexation (61) pénétrant dans un trou (102) correspondant ménagé dans la première face intérieure (101).

4. Train arrière selon l'une quelconque des revendications 1 à 3, **caractérisé en ce que** le carénage aérodynamique (5) est fixé dans la zone des branches latérales du U par des vis (8) assurant une fixation avec les coupelles de suspension (4).

5. Train arrière selon l'une quelconque des revendications 1 à 4, **caractérisé en ce que** le carénage aérodynamique (5) est fixé dans la zone des branches latérales du U par des moyens d'agrafage ou de rivetage (9) assurant une fixation avec les bras latéraux (2) et/ou avec les coupelles de suspension (4).

6. Train arrière selon l'une quelconque des revendications précédentes, **caractérisé en ce que** le carénage aérodynamique (5) a une face inférieure sensiblement plate, et comporte un contour ayant, au moins dans certaines zones périphériques, un bord relevé épousant la forme extérieure de la traverse centrale (1), des bras latéraux (2) et des coupelles de suspension (4).

7. Véhicule automobile, **caractérisé en ce qu'**il comprend un train arrière selon l'une quelconque des caractéristiques précédentes.

## Patentansprüche

1. Hinterradaufhängung eines Kraftfahrzeugs, welche einen zur Längsrichtung des Fahrzeugs senkrechten mittleren Querträger (1) umfasst, der zwischen auf jeder Seite des Fahrzeugs befindlichen seitlichen Armen (2) angeordnet ist, die an ihrem vorderen Ende (200) mit der Struktur dieses Letzteren verbunden sind und an ihrem hinteren Ende (201) Träger (3) der Hinterachsschenkel des Fahrzeugs tragen, wobei die Hinterradaufhängung eine aerodynamische Verkleidung (5) umfasst, die den mittleren Querträger (5) und den Teil der seitlichen Arme (2), welcher sich zwischen den Enden des mittleren Querträgers (1) und den hinteren Enden (201) der seitlichen Arme (2) erstreckt, von unten abdeckt, **dadurch gekennzeichnet, dass** die aerodynamische Verkleidung (5) ein aus einem Stück ausgebildetes Teil aus Kunststoff mit der allgemeinen Form eines "U" ist, von dem wenigstens ein Teil des mittleren Schenkels des "U" so gestaltet ist, dass er sich an eine nach unten gerichtete Öffnung, die entlang des mittleren Querträgers (1) ausgebildet ist, anpasst und sie verschließt, wobei die aerodynamische Verkleidung (5) auf dem mittleren Schenkel des "U" Indexierungsmittel (6) umfasst, die nach oben vorspringend ausgebildet sind, wobei diese Indexierungsmittel (6) mit einer ersten inneren Fläche (101) des mittleren Querträgers (1) zusammenwirken, die sich in einem nach unten mündenden hohlen Bereich dieses Querträgers (1) befindet, wobei die aerodynamische Verkleidung (5) außerdem auf dem mittleren Schenkel des "U" Einrastmittel (7) umfasst, die nach oben vorspringend ausgebildet sind, wobei diese Einrastmittel (7) mit Aussparungen (103) zusammenwirken, die in einer zweiten inneren Fläche (104) des mittleren Querträgers (1) ausgebildet sind, die sich in dem hohlen Bereich des Querträgers (1) gegenüber der ersten inneren Fläche (101) befindet.

2. Hinterradaufhängung nach Anspruch 1, **dadurch gekennzeichnet, dass** die aerodynamische Verkleidung (5) auch Federbeinteller (4), die ein Auflager für Aufhängungsfedern des Fahrzeugs bilden, von unten abdeckt, wobei diese Teller (4) hinten an dem mittleren Querträger (1) an die seitlichen Arme (2) angefügt sind.

3. Hinterradaufhängung nach Anspruch 1 oder 2, **dadurch gekennzeichnet, dass** die Indexierungsmittel (6) wenigstens zwei Laschen, insbesondere drei Laschen aufweisen, die über die Länge des mittleren Querträgers (1) verteilt sind, wobei jede Lasche einen Indexierungszapfen (61) trägt, der in ein entsprechendes Loch (102) eindringt, das in der ersten inneren Fläche (101) ausgebildet ist.

4. Hinterradaufhängung nach einem der Ansprüche 1 bis 3, **dadurch gekennzeichnet, dass** die aerodynamische Verkleidung (5) im Bereich der seitlichen Schenkel des "U" durch Schrauben (8) befestigt ist, die eine Befestigung mit den Federbeintellern (4) sicherstellen.

5. Hinterradaufhängung nach einem der Ansprüche 1 bis 4, **dadurch gekennzeichnet, dass** die aerodynamische Verkleidung (5) im Bereich der seitlichen Schenkel des "U" durch Heft- oder Nietmittel (9) befestigt ist, die eine Befestigung mit den seitlichen Armen (2) und/oder mit den Federbeintellern (4) sicherstellen.

6. Hinterradaufhängung nach einem der vorhergehenden Ansprüche, **dadurch gekennzeichnet, dass** die aerodynamische Verkleidung (5) eine im Wesentlichen ebene untere Fläche aufweist und eine Kontur aufweist, die wenigstens in gewissen Umfangsbereichen einen hochgezogenen Rand aufweist, der an die äußere Form des mittleren Querträgers (1), der seitlichen Arme (2) und der Federbeinteller (4) angepasst ist.

7. Kraftfahrzeug, **dadurch gekennzeichnet, dass** es eine Hinterradaufhängung nach einem der vorhergehenden Ansprüche umfasst.

## Claims

1. Rear axle of a motor vehicle comprising a central crossbeam (1) perpendicular to the longitudinal direction of the vehicle and interposed between lateral arms (2), situated one on each side of the vehicle and connected by their front end (200) to the structure thereof and carrying at their rear end (201) supports (3) for the stub axles of the vehicle's rear wheels, the rear axle it comprising an aerodynamic fairing (5) covering from below the central crossbeam (5) and the part of the lateral arms (2) which extends between the ends of the central crossbeam (1) and the rear ends (201) of the lateral arms (2), **characterized in that** the aerodynamic fairing (5) is a one-piece plastic part with a general U shape, of which at least part of the central branch of the U is shaped to fit and close a downwardly facing opening formed along the central crossbeam (1), on the central branch of the U, the aerodynamic fairing (5) comprising indexing means (6) formed protruding upward, these indexing means (6) cooperating with a first inner face (101) of the central crossbeam (1) situated in a hollow region of said crossbeam (1) opening downwardly, on the central branch of the U, the aerodynamic fairing (5) also comprising clip means (7) formed protruding upward, these clip means (7) cooperating with recesses (103) formed in a second inner face (104) of the central crossbeam (1) situated in the hollow region of the crossbeam (1) opposite the first inner face (101).

2. Rear axle according to Claim 1, **characterized in that** the aerodynamic fairing (5) also covers from below the suspension cups (4) forming supports for the vehicle's suspension springs, these cups (4) being attached to the lateral arms (2) at the rear of the central crossbeam (1).

3. Rear axle according to Claim 1 or 2, **characterized in that** the indexing means (6) comprise at least two brackets, in particular three brackets distributed over the length of the central crossbeam (1), each bracket carrying an indexing stud (61) penetrating into a corresponding hole (102) arranged in the first inner face (101).

4. Rear axle according to any of Claims 1 to 3, **characterized in that** the aerodynamic fairing (5) is fixed in the region of the side branches of the U by screws (8) ensuring fixing with the suspension cups (4).

5. Rear axle according to any of Claims 1 to 4, **characterized in that** the aerodynamic fairing (5) is fixed in the region of the side branches of the U by stapling or riveting means (9) ensuring a fixing with the lateral arms (2) and/or with the suspension cups (4).

6. Rear axle according to any of the preceding claims, **characterized in that** the aerodynamic fairing (5) has a substantially flat lower face and comprises a contour which has, at least in certain peripheral regions, a raised edge molded to the outer form of the central crossbeam (1), the lateral arms (2) and the suspension cups (4).

7. Motor vehicle, **characterized in that** it comprises a rear axle according to any of the preceding claims.
